# EUROPEAN PATENT SPECIFICATION

(11) **EP 4 204 503 B1**
(45) Date of publication and mention of the grant of the patent: **25.09.2024**
(21) Application number: 21770182.0
(22) Date of filing: 30.08.2021
(51) Int. Cl.: C09D 11/16, C09D 11/17

(54) **PEELABLE WRITING INK COMPOSITION WITH COLOR-CHANGING FOR WRITING POROUS SUBSTRATES**
ABZIEHBARE SCHREIBTINTENZUSAMMENSETZUNG MIT FARBWECHSEL ZUM SCHREIBEN AUF PORÖSEN SUBSTRATEN
COMPOSITION D'ENCRE D'ÉCRITURE PELABLE À CHANGEMENT DE COULEUR POUR SUBSTRATS POREUX

(30) Priority: 31.08.2020 EP 20305964
(43) Date of publication of application: 05.07.2023
(73) Proprietor: Société BIC, 92110 Clichy (FR)
(72) Inventor: BETHOUART, Carine, 92110 CLICHY (FR)
(74) Representative: Cabinet Beau de Loménie
(86) International application number: PCT/EP2021/073906
(87) International publication number: WO 2022/043560

(56) References cited:
- EP-A1- 2 977 416
- WO-A1-2019/049247
- CN-A- 109 504 177
- JP-A- 2002 265 843

## Description

The present invention concerns a writing ink composition, in particular allowing color-changing, more specifically an aqueous peelable writing ink composition with color-changing, in particular for writing porous substrates such as paper, printer paper or cardboard. The invention also concerns a method for preparing such a writing ink composition. A writing instrument comprising such a writing ink composition and a method for writing on a writing porous substrate are also part of the invention. Finally, the invention concerns a writing porous substrate coated with a writing ink composition according to the invention.
The writing ink composition of the invention includes at least one film-forming elastomeric polymer wherein the film-forming elastomeric polymer is an homopolymer or copolymer of polyurethane, at least one polyether-modified polysiloxane, as well as dye and pigment dispersed in water. When the writing ink composition is applied to porous substrates, the water evaporates and the polymer provides a coalesced residue on the surface of the substrate. The writing ink composition is advantageously peelable in that the residue can be removed from the surface of the substrate, preferably paper surface, for some period of time after formation without leaving a residue or damaging the substrate. Hence, the initial color (first color) of the writing ink composition after writing on a substrate can be removed by peeling, and the written mark changes into a second color. Preferably, the first and second colors are different which means that they can be distinguished from each other by the human eye. The writing ink composition of the invention is particularly suitable for use with writing porous substrates (also named porous surfaces) made, basically, of pressed, matted fibers, like paper, printer paper or cardboard, in particular writing fibrous substrates (also named fibrous surfaces). The writing ink composition of the invention is also storage-stable, easy to manufacture, and easy to apply.

The writing ink composition of the invention preferably has a low viscosity, preferably a viscosity ranging from 3 to 10 mPa.s, more preferably ranging from 3 to 7 mPa.s, (the viscosity being measured at 20°C with a Shell Cup # 1 marketed by NORCROSS^{®} Corporation) and as a result is particularly suitable for use with standard felt-tip markers that rely on a capillary feed system to draw ink from a reservoir. Thus, the writing ink composition of the invention is suitable for use in felt-pens, highlighters, markers, which typically use colored pigments. When the viscosity is less than 3 mPa.s, the pigment particles may settle more rapidly in the writing ink composition with a risk of ink leakage. Furthermore, when the viscosity is higher than 10 mPa.s, the flow rate of the writing ink composition is too low and any line was not written.

Furthermore, the writing ink composition of the invention can be included in one single writing instrument. This allows having multiple color options within the same color mark, for example when the user takes notes, journal or draws to emphasize information or to make things stand out, which allows the user not to use multiple writing instruments.

Color-changing writing ink compositions capable of changing the color of the ink by an eraser are known in the art such as in EP2977416. Said color-changing ink compositions contain a water-soluble resin, as well as pigment and dye. However, with this kind of color-changing ink compositions, peelability may be difficult after a long period of time, and is thus sometimes not satisfactory. Furthermore, the peelability of the ink compositions of the prior art requires significantly high pressure to obtain a good color-changing. In addition, the colors obtained with the ink compositions of the prior art are generally not very vivid.

EP20167374.6 also discloses a color-changing ink composition capable of changing the color of the ink by an eraser. The ink composition described contains acrylonitrile butadiene rubber (NBR) and/or hydrogenated acrylonitrile butadiene rubber (HNBR) as the film-forming agent and polyoxyethylene sorbitan ester. However surprisingly the inventors have found that the use of polyether-modified polysiloxane such as Bis-PEG 15-Methyl Ether Dimethicone (INCI name) in particular sold under the tradename Belsil^{®} DMC 6038 by Wacker improves the quality of erasing and acts as a release agent. There are indeed less traces after erasing after its introduction in the composition when compared to the composition of the prior art.

JP2002265843 describes a color changeable writing ink composition comprising an urethan resin, a pigment, a dye and water. It is mentioned in this document, that it is possible to add a silicone-based surfactant to improve the ink penetration. Hence, the skilled person in the art is encouraged to use a silicone raw material in order to facilitate the penetration of the ink into porous substrates. In contrary, according to the invention, polyether modified polysiloxane is used as release agent. That means that polyether modified polysiloxane migrates to the surface on the porous substrate and decreases the adhesion of the ink composition on porous substrate.

Therefore, there is a need to find a new color-changing writing ink composition enabling to obtain a good deposit which has, in particular, a satisfactory color intensity (vivid), a good color-changing capacity (in particular such as easiness and efficiency of the color-changing) particularly when used on writing porous substrates, preferably while avoiding an unwanted color return and/or color change or color loss due to a change in temperature.

The inventors have surprisingly found that the use of a polyether-modified polysiloxane, in combination with an homopolymer or copolymer of polyurethane, in presence of pigment and dye dispersed in water, can lead to a writing color-changing ink composition resolving the above-mentioned problems. The writing ink composition of the invention also presents the advantage of being peelable, for example with fingers, in particular by applying a low pressure (by the user), thus using less waste than with conventional erasers. Furthermore, the writing ink composition of the invention also presents the advantage of enabling a change of color. In particular, the deposit made with the writing ink composition on writing porous substrate can be easily and/or efficiently removed (peeled or rubbed), in particular the deposit can be easily removed when an intentional friction force is applied (in particular the deposit is not unintentionally removed).

In addition, the writing ink composition of the invention enables obtaining vivid colors of written marks once applied, especially on writing porous substrates, in particular the initial first color as well as the second color (after peeling) are vivid.

An additional advantage of the invention is the possibility to obtain a writing ink composition with color-changing having a good cap-off time. The term "cap-off" designated the ability of the writing ink composition of the invention with color-changing of not drying up in the writing instrument, which means in particular that the writing instrument can be left open for longer period of time, preferably one hour or even several hours, in particular with removed cap, without drying up.

The present invention therefore concerns a writing ink composition comprising:
(a) at least one film-forming elastomeric polymer wherein the film-forming elastomeric polymer (a) is an homopolymer or copolymer of polyurethane,
(b) at least one polyether-modified polysiloxane,
(c) at least one dye,
(d) at least one pigment, and
(e) water.

Hereinafter, a detailed description of the present invention will be given. The specific embodiments are meant to better illustrate the present invention, however, it should be understood that the present invention is not limited to these specific embodiments.

In the sense of the present invention, the expression "comprising a" should be understood as being synonymous with "comprising at least one".

In the sense of the present invention, the expressions "between ... and ..." or "ranging from ... to ..." should be understood as including the values of the limits.

The writing ink composition according to the present invention is advantageously a color changing writing ink.

For the purposes of the present invention, the term "color-changing writing ink" is intended to mean any writing ink which can change color after writing.

After writing, in particular on a writing substrate, the written mark made with the ink can change from a first initial color to second color. In particular, the term "color-changing writing ink" is intended to mean that the initial first color of the writing ink is changed into another (second) color. In particular, this second color is not colorless (in this sense, the writing ink according to this disclosure is not erasable). Hence, the initial color (first color) of the writing ink composition after writing on a substrate can be changed into a second color by removing part of the written mark, in particular by peeling (or rubbing). In particular, the first and second colors are different which mean that they can distinguished from each other by human eye.

The first (initial) color of the written mark before the color change will depend on the color of the dye(s) and pigment(s) contained in the writing ink composition.

By peeling the written mark, the pigment(s) is(are) removed, and therefore after peeling, the second color of the written mark will depend on the dye(s) comprised in the writing ink composition. Therefore, part of the written mark (deposit) has been removed.

The written mark obtained, in particular on cellulosic fiber paper such as paper (printer paper for example) and cardboard paper, by this writing ink can therefore change color just after writing and also even a few days after writing.

The writing ink composition according to the present invention is advantageously a peelable writing ink.

For the purposes of the present disclosure, the term "peelable" writing ink is intended to mean that the written mark made with the writing ink can be peeled (or rubbed) after writing by removing part of the written mark, such as by mechanical friction, preferably by the use of a finger or a friction body wherein the friction body can be an eraser or a tissue. For example, the eraser can be a rubber which can be made of a blend of ethylene-propylene-diene monomer rubber and polypropylene. In particular, the writing ink can be peeled (or at least partly peeled) from a writing substrate, in particular for some period of time after formation of the writing mark, without damaging the substrate. The written mark obtained, in particular on cellulosic fibers papers, by this writing ink can therefore be peeled just after writing such as less than 10 second after writing, even a few days after writing, and also even one month after writing, to change the initial (ie first) color of the writing mark in another color (second color).

More specifically, the present disclosure concerns a peelable color-changing writing ink comprising: (a) at least one film forming elastomeric polymer wherein the film-forming elastomeric polymer (a) is an homopolymer or copolymer of polyurethane, (b) at least one polyether-modified polysiloxane, (c) at least one dye, (d) at least one pigment, and (e) water, wherein the color changing , in particular from a first color into a second color; is essentially obtained by removing the pigment by peeling.

Hence, once applied, the first color of the written mark made with the writing ink composition according to the invention, can be changed by peeling off the written mark into a second color.

The writing ink composition according to the present invention is advantageously irreversibly peeled. It is therefore an irreversible peelable color-changing writing ink composition. More specifically, once the color has changed, it is not possible to change it again, and in particular it is not possible to go back to the initial color (first color).

The writing ink according to the present invention is a non-thermochromic ink. For the purposes of the present invention, the term "non-thermochromic ink" is intended to mean any ink which will not be erased or will not change its color due to a change in temperature such as an increase or a decrease. For the purposes of the present disclosure, the term "writing porous substrate" is intended to mean writing substrate that contains pores. The writing porous substrates have empty spaces or pores that allow external matter, like writing ink, to penetrate into the substrate. In particular, writing surfaces such as white board or enamel board are not considered as writing porous substrate. In particular, the writing porous substrates are fibrous. In particular, the "writing porous substrate" can be cellulosic fiber paper such as paper (printer paper for example) and cardboard paper. Advantageously, the average size of the pores of writing porous substrate ranges from 1 nanometer to 10 micrometers, in particular when measured by inverse size-exclusion chromatography.

Advantageously, the roughness of the writing substrate can be defined by its air permeability and measured by the standard ISO 8791-2:2013 (unit: mL.min⁻¹). In a preferred embodiment, the air permeability of the writing porous substrate of the invention ranges from 50 to 1,000 mL.min⁻¹, preferably from 60 to 400 mL.min⁻¹, and more preferably from 80 to 280 mL.min⁻¹.

In particular, the writing porous substrate is chosen among writing porous substrate comprising cellulosic fibers such as paper, printer paper, or cardboard.

The writing ink composition according to the present invention is more specifically an aqueous writing ink. For the purposes of the present invention, the term "writing ink" is intended to mean any ink which is intended to be used in a writing instrument, and in particular in a felt-pen, a highlighter, a marker. A writing ink should not be confused with a printing ink which is used in printing machines and which does not have the same technical constraints, and thus the same specifications. Indeed, a writing ink must not contain solid particles of which the size is greater than the channels of the writing instrument, in order to avoid blocking them, which would inevitably lead to writing being irreversibly stopped. It must also dry sufficiently rapidly to avoid smudging the writing medium. It must also avoid the problems of migration (bleeding) over time. Thus, the writing ink composition according to the present invention will be suitable for the writing instrument for which it is intended, in particular for handheld writing instrument.

In the sense of the invention, "film-forming" means a polymer capable of forming, by itself a macroscopically continuous film on a writing substrate, in particular on a writing porous substrate, and preferably a cohesive film.

In the sense of the invention, "elastomeric" means a polymer that displays rubber-like elasticity, i.e. a deformable, flexible polymer which has viscoelastic properties.

In the sense of the invention, a "polymer" is a compound (in particular a large molecule or a macromolecule) corresponding to the repetition of one or more units (these units being derived from compounds called monomers), and in particular the repetition of at least two repeating units, and preferably at least ten repeating units.

The film-forming elastomeric polymer (a) allows the fixation of the writing ink composition of the invention on the paper, and therefore avoids the written mark (deposit) of the writing ink to be peeled (i.e. removed) by simply brushing it with another sheet of paper while being able to change its initial first color to another one by peeling with a finger or a friction body. The at least one film-forming elastomeric polymer (a) of the invention is an homopolymer or copolymer of polyurethane, advantageously selected in the group consisting of amphoteric polyurethanes, anionic polyurethanes, cationic polyurethanes, non-ionic polyurethanes, polyester-polyurethanes, polyether-polyurethanes and mixtures thereof, more specifically the polyurethane (a) is an anionic polyurethane homopolymer or copolymer, even more specifically the polyurethane (a) is an anionic polyurethane homopolymer, in particular the polyurethane (a) is an aliphatic polyurethane. More particularly it can be a polyester-polyurethane such as an anionic aliphatic polyester-polyurethane for example commercially available under the name Impranil^{®} DLE, Impranil^{®} DL1069 or Bahydrol^{®} UH240 (Covestro AG), a polyether diol polyurethane such as an anionic aliphatic polyurethane based on polyester diols for example commercially available under the name Esacote PU78 (Lamberti) or an anionic aliphatic polyurethane for example commercially available under the name Esacote SW3 (Lamberti). More advantageously, the polyurethane (a) is a polyether diol polyurethane such as an anionic aliphatic polyurethane based on polyester diols for example commercially available under the name Esacote PU78 (Lamberti) or an aliphatic polyurethane for example commercially available under the name Esacote SW3 (Lamberti), still more advantageously it is an aliphatic polyurethane for example commercially available under the name Esacote SW3 (Lamberti).

In an advantageous manner, the polyurethane (a) is in the form of an aqueous dispersion.

Advantageously, the writing ink composition of the invention does not comprise a water-soluble resin. Advantageously, the writing ink composition of the invention, does not comprise a water-soluble resin and the polyurethane (a) is in the form of an aqueous dispersion.

In an advantageous manner, the film-forming elastomeric polymer (a) is not in the form of spherical particles such as beads, more specifically the homopolymer or copolymer of polyurethane (a) is not in the form of spherical particles such as beads.

Advantageously, the total solid content of the polyurethane (a) ranges from 8 to 25%, more specifically from 10 to 20%, by weight relative to the total weight of the writing ink composition.

The writing ink composition of the invention also comprises at least one polyether-modified polysiloxane.
In the sense of the present invention the term "polyether-modified polysiloxane" is intended to mean any polysiloxane, in particular any alkylpolysiloxane, more particularly any poly((C₁-C₆)alkyl)siloxane, which is modified by a polyether, advantageously a poly ((C₁-C₆)alkyloxy. More specifically, the polyether-modified polysiloxane is a polyalkyloxy-polysiloxane.
In an advantageous manner, the polyether-modified polysiloxane (b) is non-ionic, more advantageously it is water soluble or dispersible in water. In an advantageous manner, the polyether-modified polysiloxane (b) is a polyether-modified poly((C₁-C₆)alkyl)siloxane, in particular a polyalkyloxy-poly((C₁-C₆)alkyl)siloxane, in particular a polyether-modified polydimethylsiloxane, more specifically a poly((C₁-C₆)alkyloxy polydimethylsiloxane, more particularly a polyoxyethylenated polydimethylsiloxane, and in a particular manner it is a Bis-PEG 15-Methyl Ether Dimethicone (INCI name), in particular having the following formula (1): 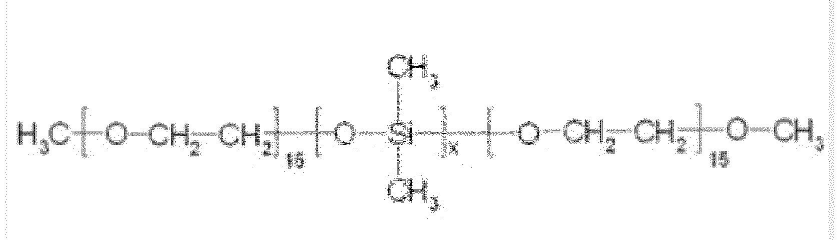 for example commercially available under the name BELSIL^{®} DMC 6038 (Wacker).

Advantageously, the total amount of the at least one polyether-modified polysiloxane (b) in the writing ink composition of the invention ranges from 0.5 to 5 % by weight, more specifically from 1 to 4% by weight, relative to the total weight of the writing ink composition.

The writing ink composition of the invention also comprises at least one dye (c), in particular a mixture of dyes, solubilized in water. The term "dyes" should be understood as meaning colored, mineral or organic particles of any form, which are soluble in the medium in which they are solubilized, and which are intended to color the writing ink composition once applied on a writing porous substrate after peeling. Thanks to the presence of a dye in the writing ink composition of the invention, the initial (first) color of the writing mark can change in another color (second color) by peeling with a finger or a friction body. The at least one dye (c) may be selected in the group consisting of direct dyes (for example C.I direct black 17, 19, 22, 32, 38, 51, 71; C.I direct yellow 4, 26, 44, 50; C.I direct red 1, 4, 23, 31, 37, 39, 75, 80, 81, 83, 225, 226, 227; C.I direct blue 1, 15, 41, 71, 86, 87, 106, 108, 199, and the like), acid dyes (for example C.I acid black 1, 2, 24, 26, 31, 52, 107, 109, 110, 119, 154; C.I acid yellow 1, 7, 17, 19, 23, 25, 29, 38, 42, 49, 61, 72, 78, 110, 127, 135, 141, 142; C.I acid red 8, 9, 14, 18, 26, 27, 33, 35, 37, 51, 52, 57, 82, 83, 87, 92, 94, 111, 129, 131, 138, 186, 249, 254, 265, 276; C.I acid violet 15, 17, 49; C.I acid blue 1, 3, 7, 9, 15, 22, 23, 25, 40, 41, 43, 62, 78, 83, 90, 93, 100, 103, 104, 112, 113, 158; C.I acid green 3, 9, 16, 25, 27; C.I acid orange 56, and the like), food dyes (such as C.I. food yellow 3, and the like), Malachite green (C.I 4200) Victoria blue FB (C.I. 44045) methyl violet FN (C.I. 42535), rhodamine F4G (C.I. 45160), and rhodamine 6GCP (C.I 45160), and mixtures thereof.

The content of the at least one dye (c) in the writing ink composition according to the invention ranges from 0.1 to 10% by weight, advantageously from 0.2 to 8% by weight, and more advantageously from 0.3 to 5% by weight, by weight relative to the total weight of the writing ink composition.

The writing ink composition of the present invention also comprises at least one pigment (d). The term "pigment" should be understood as meaning white or colored, mineral or organic particles of any form, which are insoluble in the medium in which they are solubilized, and which are intended to color the writing ink composition once applied on a writing porous substrate before peeling. The pigments (d) are also generally contained in a dispersion, where the grinding down or particle size reduction is accompanied by appropriate dispersants to achieve stable dispersions. The at least one pigment (d) is preferably in the form of a pigment dispersion, more preferably selected in the group consisting of pigment black 7 (such as Flexiverse III black 7 by SunChemical^{®}), pigment blue 15:3 (such as APE FREE BL 15:3 DISP by SunChemical^{®}), pigment red 210 (such as Sunsperse^{®}Red 210by SunChemical^{®}), pigment green 7 (such as Sunsperse Eco green, Flexiverse FD Green, Flexiverse Green 7, Flexiverse HC GRN 7 by SunChemical^{®}), and mixtures thereof. In a preferred embodiment, the at least one pigment (b) is selected in the group consisting of pigment black 7 (such as Flexiverse III black 7 by SunChemical^{®}), pigment blue 15:3 (such as APE FREE BL 15:3 DISP by SunChemical^{®}), and mixtures thereof.

According to a preferred embodiment, the diameter of the pigment in the pigment dispersion is less than 1 µm, and preferably less than 0.7 µm.

Advantageously, the total amount of pigment (d) ranges from 30 to 60% by weight, relative to the total weight of the pigment dispersion.

The total amount of pigment (d) in the writing ink composition according to the invention ranges from 0.1 to 10% by weight, and preferably from 0.5 to 7% by weight, relative to the total weight of the writing ink composition.

The writing ink composition of the invention also contains water (e) as the solvent.

Advantageously, the total amount of water (e) in the writing ink composition of the invention ranges from 10 to 80% by weight, more specifically from 20 to 80% by weight, and even more specifically from 40 to 80% by weight, relative to the total weight of the writing ink composition.

Advantageously, the total amount of water (e) in the writing ink composition of the invention ranges from 10 to 80% by weight, more specifically from 10 to 70% by weight, and in particular from 20 to 60% by weight, relative to the total weight of the writing ink composition.

More specifically, writing ink composition of the invention are water-based inks compositions. Advantageously, water (e) is the main solvent of the writing ink composition of the invention.

The writing ink composition of the invention may further contain at least one plasticizer. The plasticizer of the invention is chosen in the group consisting of alcohols, preferably glycerin, benzoate esters, diisobutyrate esters such as trimethyl pentanyl diisobutyrate, and mixtures thereof, and more preferably glycerin, benzoate esters, and mixtures thereof, in particular glycerin. According to a preferred embodiment, the writing ink composition of the invention comprises as plasticizer a mixture of at least one ester and at least one alcohol, wherein the at least one alcohol preferably has a boiling point higher than 160°C, and more preferably is glycerin (boiling point: 290°C).

Advantageously, the content of plasticizer in the writing ink composition of the invention ranges from 1 to 25% by weight, and more advantageously from 7 to 20% by weight, relative to the total weight of the writing ink composition. The writing ink composition according to the present invention may further comprise additional additive(s) known by the skilled person to be usable in writing ink compositions, in particular in aqueous writing ink compositions, advantageously selected in the group consisting of antimicrobial agents, antifungal agents, dispersing agents, wetting agents, pH regulators, and mixtures thereof.

Advantageously, the content of additional additive(s) in the writing ink composition of the invention ranges from 0.1 to 30% by weight, more advantageously from 0.1 to 20% by weight, and even more advantageously from 0.1 to 10% by weight, relative to the total weight of the writing ink composition.

The writing ink composition of the invention may advantageously contain at least one antimicrobial agent such as methyl paraben, phenoxyethanol, isothiazolinone, 1,2-benzoisothiazolin-3-one, 2-methyl-4-isothiazolin-3-one, and mixtures thereof.

Advantageously, the antimicrobial agent is present in the writing ink composition of the invention in a content ranging from 0.1 to 5% by weight, and more advantageously from 0.1 to 2% by weight, relative to the total weight of the writing ink composition.

The writing ink composition according to the present invention may also contain a pH regulator, preferably chosen in the group consisting of ammonia, urea, monoethanolamine, diethanolamine, triethanolamine, alkali metal salts of phosphoric acid such as tripolyphosphate, sodium carbonate and hydroxides of alkali metals such as sodium hydroxide.

The writing ink composition according to the present invention is advantageously peelable, more advantageously it is a peelable color-changing writing ink, still more advantageously the writing ink composition is changing from a first initial color in a second color by peeling, in particular by peeling such as by mechanical friction, more particularly by the use of a finger or a friction body wherein the friction body is an eraser or a tissue, in particular an eraser. The writing ink composition of the invention is therefore not peelable or color-changing by the use of the heat generated by the friction of the finger or the eraser.

Advantageously, the eraser used as a friction body may be chosen in the group consisting of ethylene-propylene-diene monomer (EPDM) rubber, Vulcanized Thermoplastic Elastomer (TPV) which is a blend of ethylene-propylene-diene monomer (EPDM) rubber and polypropylene (PP), ethylene-propylene rubber (EPR), poly(styrene-butadiene-styrene) (SBS), styrene ethylene butylene styrene (SEBS), natural rubber (NR), polyisoprene (IR), polyvinyl chloride, styrene-based thermoplastic elastomers including styrene-butadiene-styrene (SBS), styrene-ethylene-butylene-styrene (SEBS), styrene-ethylene-propylene-styrene (SEPS), styrene-ethylene-ethylene-propylene-styrene (SEEPS), polyether based polyurethane (PTU) , and mixtures thereof.

Advantageously, the tissue used as a friction body may be chosen in the group consisting of cotton fabric, synthetic fabric and leather fabric, and more advantageously cotton fabric.

The writing ink composition according to the present invention has advantageously a viscosity of 3 to 10 mPa.s, and more advantageously of 3 to 7 mPa.s, measured at 20°C with a Shell Cup # 1 marketed by NORCROSS^{®} Corporation. When the viscosity is less than 3 mPa.s, the pigment particles may settle more rapidly in the writing ink composition with a risk of ink leakage. Furthermore, when the viscosity is higher than 10 mPa.s, the flow rate of the writing ink composition is too low and any line was not written.

In an advantageous embodiment the writing ink composition according to the invention is intended for writing porous substrate (also named porous surfaces), more specifically writing fibrous substrate, in particular made, basically, of pressed, matted fibers, preferably comprising cellulose fibers, advantageously selected in the group consisting of paper, printer paper and cardboard.

The present invention also concerns a method for preparing a writing ink composition according to the invention, comprising the steps of:
(i) under stirring, adding the at least one dye (c) to water (e),
(ii) under stirring, adding the at least one film-forming elastomeric polymer (a) to the mixture obtained in step (i),
(iii) under stirring, adding the at least one polyether-modified polysiloxane (b), the at least one pigment (d), and the optional at least one plasticizer, to the mixture obtained in step (ii), and
(iv) under stirring, adding the optional additives to the mixture obtained in step (iii).

The film-forming elastomeric polymer (a), polyether-modified polysiloxane (b), dye(s) (c), pigment (d), water (e), as well as the optional plasticizer and additive(s), are as defined above for the writing ink composition according to the invention.

During steps (i), (ii), (iii), and (iv), the ink ingredients are mixed under stirring at room temperature (20°C), advantageously at a stirring speed ranging from 200 to 700 rpm, and more advantageously at a stirring speed of 500 rpm.

The writing ink composition obtained in steps (i), (ii), (iii), and (iv), can be homogenized during a certain period of time ranging from 3 to 20 minutes, and preferably from 5 to 10 minutes.

The present invention also concerns a writing instrument, more specifically a handheld writing instrument, in particular a pen such as a felt-pen, a highlighter, a marker, and more advantageously it is a writing felt-pen, a coloring felt-pen, a highlighter, containing a writing ink composition according to the invention. Advantageously the writing instrument is not a ball pen.

Advantageously, the writing ink composition according to the invention is not a ball pen ink and the writing ink composition of the invention has a low viscosity, in particular a viscosity ranging from 3 to 10 mPa.s,
Advantageously, the writing instrument according to the present invention comprises an eraser, in particular located on the cap or on the non-writing end of the writing instrument. More particularly, the eraser consists of ethylene-propylene-diene monomer (EPDM) rubber, Vulcanized Thermoplastic Elastomer (TPV) which is a blend of ethylene-propylene-diene monomer (EPDM) rubber and polypropylene (PP), ethylene-propylene rubber (EPR), poly(styrene-butadiene-styrene) (SBS), styrene ethylene butylene styrene (SEBS), natural rubber (NR), polyisoprene (IR), polyvinyl chloride, styrene-based thermoplastic elastomers including styrene-butadiene-styrene (SBS), styrene-ethylene-butylene-styrene (SEBS), styrene-ethylene-propylene-styrene (SEPS), styrene-ethylene-ethylene-propylene-styrene (SEEPS), polyether based polyurethane (PTU), and mixtures thereof.

According to a preferred embodiment, the writing instrument according to the present invention comprises:
- an axial barrel containing a writing ink composition according to the invention, and
- a pen body which delivers the writing ink composition stored in the axial barrel.

Another object of the present invention is a method for writing on a writing porous substrate, comprising the step of applying a writing ink composition according to the invention to a writing porous substrate, preferably fibrous, preferably comprising cellulose fibers, and more preferably chosen in the group consisting of paper, printer paper or cardboard. The method for writing on a writing porous substrate may further comprise the step of changing the initial color (first color) of the writing into another color (second color) by peeling, preferably by peeling the writing mark with a finger or with a friction body wherein the friction body is an eraser or a tissue, preferably said first and second colors being different from each other.

Finally, another object of the present invention is a writing porous substrate, preferably fibrous, preferably comprising cellulose fibers, coated with a writing ink composition according to the present invention, wherein the writing substrate is preferably chosen in the group consisting of paper, printer paper or cardboard.

In addition to the foregoing, the invention also comprises other provisions which will emerge from the additional description which follows, which relates to the preparation of writing ink compositions according to the present invention and comparative examples.

### Examples:

### Example 1: preparation of a writing ink composition according to the invention

A writing ink composition according to the present invention comprising the ink ingredients of Table 1 was prepared.

**Table 1:**

| **Trade name** | **Chemical name** | **Composition 1 according to the invention** (% **by weight)** |
|---|---|---|
| Water | | 45.90% |
| Esacote SW3^{®} | Anionic dispersion of polyurethane (dry extract: 35 wt. % and about 65% of water | 40% (ie 14% of polyurethane) |
| Belsil^{®}DMC6038 | INCI name: Bis-PEG-15-Methyl Ether Dimethicone | 2% |
| Glycerin | Glycerin | 7.5% |
| APE FREE BL 15:3 Disp BPD 0015 | Pigment dispersion (water-based dispersion comprising about 42 wt.% pigment) | 3.50% (ie 1.47% of pigment) |
| Sanolin^{®} Rhodamine B02 | Acid Red 52 | 0.60% |
| Acticide PHE | Phenoxyethanol | 0.50% |
| **Total** | | **100%** |

For a preparation of 1 kg, 459 g of water was introduced at room temperature in a dissolver DISPERMAT^{®} LC75 (dissolver disc Ø 60 mm), and 6 g of Sanolin^{®} Rhodamine B02 (Clariant) were added under agitation (stirring speed: 500 rpm). Then, 400 g of Esacote SW3^{®} (Lamberti) were added at the same stirring speed. The % of polyurethane in Esacote SW3^{®} (Lamberti) represents 35 wt. % (dry extract), and thus the % of polyurethane in the final ink composition is of 14 % by weight. After 5 minutes, 75 g of glycerin were introduced. After 5 minutes under the same stirring speed, 20 g of Belsil^{®}DMC6038 (Wacker) were added. After 5 minutes under the same stirring speed, 35 g of a blue pigmented dispersion APE FREE BL 15:3 Disp BPD 0015 (SunChemical) were added. The mixture was stirred for 5 minutes more. Then, 5 g of Acticide PHE were added, and the mixture was stirred for 5 minutes more to obtain the final writing ink composition.

The viscosity of the writing ink composition was measured at 20°C with a Shell Cup # 1 marketed by NORCROSS^{®} Corporation, according to the following procedure:
1. Dip the Shell Cup in the writing ink composition until the cup is completely filled with ink composition.
2. Take the Shell Cup out of the fluid and start the timer simultaneously.
3. Stop the timer as soon as the fluid does not flow out any more. The time displayed on timer is reported as the Shell Cup viscosity at 20°C of the fluid.
4. Clean and dry the Shell Cup.
5. Repeat steps 1 to 5 with the same fluid two times.
6. Report the average viscosity of the three measures.
7. Store the Shell Cup at 20°C.

The viscosity of the writing ink composition of example 1 measured according to this procedure was: 5.9 mPa.s.

### Example 2: preparation of a comparative writing ink composition 2.

A comparative writing ink composition comprising the ink ingredients of Table 2 was prepared.

**Table 2:**

| **Trade name** | **Chemical name** | **Comparative ink composition 2** (% **by weight)** |
|---|---|---|
| Water | | 38.40% |
| Europrene^{®} Latice 084 | Anionic dispersion of styrene butadiene copolymer (SBR) (dry extract: 41 wt. %) | 45% (ie 18.45 % of SBR) |
| Belsil^{®}DMC6038 | INCI name: Bis-PEG-15-Methyl Ether Dimethicone | 2% |
| Glycerin | Glycerine | 10% |
| APE FREE BL 15:3 Disp BPD 0015 | Pigment dispersion (water-based dispersion comprising about 42 wt. % pigment) | 3.50% (ie 1.47% of pigment) |
| Sanolin^{®} Rhodamine B02 | Acid Red 52 | 0.60% |
| Acticide PHE | Phenoxyethanol | 0.50% |
| **Total** | | **100%** |

For a preparation of 1 kg, 384 g of water were introduced at room temperature in a dissolver DISPERMAT^{®} LC75 (dissolver disc Ø 60 mm), and 6 g of Sanolin^{®} Rhodamine B02 (Clariant) were added under agitation (stirring speed: 500 rpm). Then, 450 g of Europrene Latice 084^{®} (Versalis) were added at the same stirring speed. The % of SBR in Europrene Latice 084^{®} (Versalis) represents 41 wt. % (dry extract), and thus the % of SBR in the final ink composition is of 18.45% by weight. After 5 minutes, 100 g of glycerin were introduced. After 5 minutes under the same stirring speed, 20 g of Belsil^{®}DMC6038 (Wacker) were added. After 5 minutes under the same stirring speed, 35 g of a blue pigmented dispersion APE FREE BL 15:3 Disp BPD 0015 (SunChemical) were added. The mixture was stirred for 5 minutes more. Then, 5 g of Acticide PHE were added, and the mixture was stirred for 5 minutes more in order to obtain the final writing ink composition.

The viscosity of the writing ink composition measured at 20°C with a Shell Cup # 1 marketed by NORCROSS^{®} Corporation was 4.6 mPa.s.

### Example 3: preparation of a comparative writing ink composition 3.

A comparative writing ink composition comprising the ink ingredients of Table 3 was prepared.

**Table 3:**

| **Trade name** | **Chemical name** | **Comparative ink composition 3** (% by weight) |
|---|---|---|
| Water | | 45.90% |
| Esacote SW3^{®} | Anionic dispersion of polyurethane (dry extract: 35 wt. %) | 40% (ie14% of polyurethane) |
| PAT^{®}662(Wurtz) | Polyoxyethylene sorbitan monolaurate | 2% |
| Glycerin | Glycerine | 7.5% |
| APE FREE BL 15:3 Disp BPD 0015 | Pigment dispersion (water-based dispersion comprising about 42 wt. % pigment) | 3.5% (ie 1.47% of pigment) |
| Sanolin^{®} Rhodamine B02 | Acid Red 52 | 0.6% |
| Acticide PHE | Phenoxyethanol | 0.5% |
| **Total** | | **100%** |

For a preparation of 1 kg, 459 g of water was introduced at room temperature in a dissolver DISPERMAT^{®} LC75 (dissolver disc Ø 60 mm), and 6 g of Sanolin^{®} Rhodamine B02 (Clariant) were added under agitation (stirring speed: 500 rpm). Then, 400 g of Esacote SW3^{®} (Lamberti) were added at the same stirring speed. The % of polyurethane in Esacote SW3^{®} (Lamberti) represents 35 wt. % (dry extract), and thus the % of polyurethane in the final ink composition is of 14% by weight. After 5 minutes, 75 g of glycerin were introduced. After 5 minutes under the same stirring speed, 20 g of PAT^{®}662(Wurtz) were added. After 5 minutes under the same stirring speed, 35 g of a blue pigmented dispersion APE FRE BL 15:3 Disp BPD 0015 (SunChemical) were added. The mixture was stirred for 5 minutes more. Then, 5 g of Acticide PHE were added, and the mixture was stirred for 5 minutes more to obtain the final writing ink composition.

The viscosity of the writing ink composition measured at 20°C with a Shell Cup # 1 marketed by NORCROSS^{®} Corporation was 5.7 mPa.s.

### Example 4: peelability performances of the prepared writing ink compositions 1-3

### Erasability performance: Measurement of peelability

The peelability (erasing efficiency of the first color) is the ability of the eraser to peel correctly the written mark of first color applied on a writing porous substrate (calligraph notebook: Calligraphe LIGNE 7000 (70g/m², 210 x 297 mm, 80 pages, by Clairefontaine), evaluated by visual assessment according to the following method at 23°C and 50% relative humidity. The erasability performance is part of the color-changing performances of the writing ink composition.

The color of the obtained written mark made on the writing porous substrate is called "color 1" and corresponds to the initial (first) color of the written mark (here color 1: blue). The written mark was then peeled (or rubbed) with an eraser, i.e. polyether based polyurethane (PTU), just after writing (around 10 seconds after writing), to peel the initial color of the written mark and allow it to change from initial color 1 (here color 1: blue) into a second color 2 (here color 2: pink). Hence, the initial color 1 (here color 1: blue) was removed by peeling with the eraser.

The method is as follows:
Loops were drawn with a pen on the writing porous substrate, and then peeled in one time back and forth.

The scoring (i.e. the peeling efficiency of color 1) is defined as follows:
10: Erasability by peeling of the first color 1 is very efficient (no remaining written mark of the initial color 1) - The color of the writing ink composition after applying on the writing porous substrate and after peeling corresponds to color 2.
5: The color of the writing ink composition after applying on the porous substrate and after peeling is not efficient (remaining written marks of the initial color 1 into the color 2).
0: Erasability by peeling of the first color 1 is not efficient - The color of the writing ink composition after applying on the writing porous substrate and after peeling is not efficient (significant residual written marks of the initial (first) color 1 into the color 2).

The results are indicated in Table 4 below.

**Table 4: Comparison of the color-changing performances of the writing ink composition 1 of the invention (example 1) with the comparative writing ink compositions 2 and 3 (Comparative examples 2 and 3)**

| Writing ink compositions | Color-changing of the initial color after peeling - Peeling efficiency of color 1 |
|---|---|
| writing ink composition 1 (invention) | 10 |
| Comparative writing ink composition 2 | 5 |
| Comparative writing ink composition 3 | 0 |

As shown in Table 4, the written marks of the writing ink composition 1 according to the invention (example 1) exhibit good results in terms of efficiency of the erasing by peeling (the initial color of the written mark was efficiently removed).

The written mark made, with the comparative writing ink compositions 2 and 3 of examples 2 and 3 cannot be peeled efficiently, in particular when compared with the written mark made with the writing composition of example 1 according to the invention, which can be peeled efficiently and easily. In particular, it should be also noted that even if the comparative composition 2 comprises more film-forming elastomeric polymer than composition 1 according to the invention, it can be less efficiently peeled than composition 1.

## Claims

1. A writing ink composition comprising:
(a) at least one film-forming elastomeric polymer wherein the film-forming elastomeric polymer (a) is an homopolymer or copolymer of polyurethane,
(b) at least one polyether-modified polysiloxane,
(c) at least one dye,
(d) at least one pigment, and
(e) water
wherein the total content of the at least one dye (c) ranges from 0.1 to 10 % by weight, relative to the total weight of the writing ink composition and the total amount of the pigment (d) ranges from 0.1 to 10% by weight, relative to the total weight of the writing ink composition.

2. The writing ink composition according to claim 1, wherein the homopolymer or copolymer of polyurethane (a) is selected in the group consisting of amphoteric polyurethanes, anionic polyurethanes, cationic polyurethanes, non-ionic polyurethanes, polyester-polyurethanes, polyether-polyurethanes and mixtures thereof, more specifically the polyurethane (a) is an anionic polyurethane homopolymer.

3. The writing ink composition according to any of claim 1 or 2, wherein the homopolymer or copolymer of polyurethane (a) is in the form of an aqueous dispersion.

4. The writing ink composition according to any one of claims 1 to 3, wherein the total solid content of the polyurethane (a) ranges from 8 to 25%, more specifically from 10 to 20%, by weight relative to the total weight of the writing ink composition.

5. The writing ink composition according to any one of claims 1 to 4, wherein the at least one polyether-modified polysiloxane (b) is non-ionic.

6. The writing ink composition according to any one of claims 1 to 5, wherein the at least one polyether-modified polysiloxane (b) is a polyether-modified polydimethylsiloxane, advantageously a polyoxyethylenated polydimethylsiloxane, and in particular it is a Bis-PEG 15-Methyl Ether Dimethicone.

7. The writing ink composition according to any one of claims 1 to 6, wherein the total amount of the at least one polyether-modified polysiloxane (b) ranges from 0.5 to 5 % by weight, more specifically from 1 to 4% by weight, relative to the total weight of the writing ink composition.

8. The writing ink composition according to any one of claims 1 to 7, wherein the at least one dye (c) is selected in the group consisting of direct dyes, for example C.I direct black 17, 19, 22, 32, 38, 51, 71; C.I direct yellow 4, 26, 44, 50; C.I direct red 1, 4, 23, 31, 37, 39, 75, 80, 81, 83, 225, 226, 227; C.I direct blue 1, 15, 41, 71, 86, 87, 106, 108, 199,acid dyes, for example C.I acid black 1, 2, 24, 26, 31, 52, 107, 109, 110, 119, 154; C.I acid yellow 1, 7, 17, 19, 23, 25, 29, 38, 42, 49, 61, 72, 78, 110, 127, 135, 141, 142; C.I acid red 8, 9, 14, 18, 26, 27, 33, 35, 37, 51, 52, 57, 82, 83, 87, 92, 94, 111, 129, 131, 138, 186, 249, 254, 265, 276; C.I acid violet 15, 17, 49; C.I acid blue 1, 3, 7, 9, 15, 22, 23, 25, 40, 41, 43, 62, 78, 83, 90, 93, 100, 103, 104, 112, 113, 158; C.I acid green 3, 9, 16, 25, 27; C.I acid orange 56,food dyes, such as C.I. food yellow 3, Malachite green (C.I 4200) Victoria blue FB (C.I. 44045) methyl violet FN (C.I. 42535), rhodamine F4G (C.I. 45160), and rhodamine 6GCP (C.I 45160), and mixtures thereof.

9. The writing ink composition according to any one of claims 1 to 8, wherein the at least one pigment (d) is in the form of a pigment dispersion, advantageously selected in the group consisting of pigment black 7, pigment blue 15:3, pigment red 210, pigment green 7 and mixtures thereof, and more advantageously selected in the group consisting of pigment black 7, pigment blue 15:3 and mixtures thereof.

10. The writing ink composition according to claim 1 to 9, wherein the total amount of the pigment (d) ranges from 0.5 to 7% by weight, relative to the total weight of the writing ink composition and/or wherein the total content of the at least one dye (c) ranges from 0.2 to 8%, and in particular from 0.3 to 5% by weight, relative to the total weight of the writing ink composition.

11. The writing ink composition according to any one of claims 1 to 10, wherein the total amount of water (e) ranges from 10 to 80% by weight, more specifically from 20 to 80% by weight, and in particular from 40 to 80% by weight, relative to the total weight of the writing ink composition.

12. The writing ink composition according to any one of claims 1 to 11, wherein the composition further comprises at least one additive, advantageously selected in the group consisting of antimicrobial agents, antifungal agents, dispersing agents, wetting agents, pH regulators, and mixtures thereof.

13. The writing ink composition according to any one of claims 1 to 12, wherein it is a peelable writing ink, more specifically a peelable color-changing writing ink, advantageously wherein the writing ink composition is changing from a first initial color in a second color by peeling, more advantageously by the use of a finger or a friction body wherein the friction body is an eraser or a tissue.

14. A writing instrument containing a writing ink composition according to any one of claims 1 to 13, wherein the writing instrument is a pen, advantageously selected in the group consisting of a felt-pen, a highlighter, a marker, and more advantageously a writing felt-pen, a coloring felt-pen, a highlighter, optionally wherein the writing instrument comprises an eraser, advantageously located on the cap or on the non-writing end of the writing instrument.

15. A method for writing on a writing porous substrate, comprising the step of applying a writing ink composition according to any one of claims 1 to 13 to a writing porous substrate, advantageously selected in the group consisting of paper, printer paper and cardboard, more specifically further comprising the step of changing the initial color (first color) of the writing mark into another color (second color) by peeling, advantageously by peeling the writing mark with a finger or with a friction body wherein the friction body is an eraser or a tissue.

## Patentansprüche

1. Schreibtintenzusammensetzung, umfassend:
(a) mindestens ein filmbildendes elastomeres Polymer, wobei das filmbildende elastomere Polymer (a) ein Homopolymer oder Copolymer aus Polyurethan ist,
(b) mindestens ein polyethermodifiziertes Polysiloxan,
(c) mindestens einen Farbstoff,
(d) mindestens ein Pigment, und
(e) Wasser
wobei der Gesamtgehalt des mindestens einen Farbstoffs (c) von 0,1 bis 10 Gew.-% relativ zu dem Gesamtgewicht der Schreibtintenzusammensetzung reicht und die Gesamtmenge des Pigments (d) von 0,1 bis 10 Gew.-% relativ zu dem Gesamtgewicht der Schreibtintenzusammensetzung reicht.

2. Schreibtintenzusammensetzung nach Anspruch 1, wobei das Homopolymer oder Copolymer aus Polyurethan (a) in der Gruppe ausgewählt ist, bestehend aus amphoteren Polyurethanen, anionischen Polyurethanen, kationischen Polyurethanen, nichtionischen Polyurethanen, Polyester-Polyurethanen, Polyether-Polyurethanen und Mischungen davon, wobei spezieller das Polyurethan (a) ein anionisches Polyurethan-Homopolymer ist.

3. Schreibtintenzusammensetzung nach einem der Ansprüche 1 oder 2, wobei das Homopolymer oder Copolymer aus Polyurethan (a) in der Form einer wässrigen Dispersion vorliegt.

4. Schreibtintenzusammensetzung nach einem der Ansprüche 1 bis 3, wobei der Gesamtfeststoffgehalt des Polyurethans (a) von 8 bis 25 Gew.-%, spezieller von 10 bis 20 Gew.-%, relativ zu dem Gesamtgewicht der Schreibtintenzusammensetzung reicht.

5. Schreibtintenzusammensetzung nach einem der Ansprüche 1 bis 4, wobei das mindestens eine polyethermodifizierte Polysiloxan (b) nichtionisch ist.

6. Schreibtintenzusammensetzung nach einem der Ansprüche 1 bis 5, wobei das mindestens eine polyethermodifizierte Polysiloxan (b) ein polyethermodifiziertes Polydimethylsiloxan, vorteilhafterweise ein polyoxyethyleniertes Polydimethylsiloxan, und insbesondere ein Bis-PEG-15-Methylether-Dimethicon ist.

7. Schreibtintenzusammensetzung nach einem der Ansprüche 1 bis 6, wobei die Gesamtmenge des mindestens einen polyethermodifizierten Polysiloxans (b) von 0,5 bis 5 Gew.-%, spezieller von 1 bis 4 Gew.-%, relativ zu dem Gesamtgewicht der Schreibtintenzusammensetzung reicht.

8. Schreibtintenzusammensetzung nach einem der Ansprüche 1 bis 7, wobei der mindestens eine Farbstoff (c) in der Gruppe ausgewählt ist, bestehend aus Direktfarbstoffen, zum Beispiel C.I Direct Black 17, 19, 22, 32, 38, 51, 71; C.I Direct Yellow 4, 26, 44, 50; C.I Direct Red 1, 4, 23, 31, 37, 39, 75, 80, 81, 83, 225, 226, 227; C.I Direct Blue 1, 15, 41, 71, 86, 87, 106, 108, 199, Säurefarbstoffe, zum Beispiel C.I Acid Black 1, 2, 24, 26, 31, 52, 107, 109, 110, 119, 154; C.I Acid Yellow 1, 7, 17, 19, 23, 25, 29, 38, 42, 49, 61, 72, 78, 110, 127, 135, 141, 142; C.I Acid Red 8, 9, 14, 18, 26, 27, 33, 35, 37, 51, 52, 57, 82, 83, 87, 92, 94, 111, 129, 131, 138, 186, 249, 254, 265, 276; C.I Acid Voilet 15, 17, 49; C.I Acid Blue 1, 3, 7, 9, 15, 22, 23, 25, 40, 41, 43, 62, 78, 83, 90, 93, 100, 103, 104, 112, 113, 158; C.I Acid Green 3, 9, 16, 25, 27; C.I Acid Orange 56, Lebensmittelfarbstoffe, wie etwa C.I. Food Yellow 3, Malachite Green (C.I 4200) Victoria Blue FB (C.I. 44045) Methyl Violett FN (C.I. 42535), Rhodamine F4G (C.I. 45160) und Rhodamine 6GCP (C.I 45160) und Mischungen davon.

9. Schreibtintenzusammensetzung nach einem der Ansprüche 1 bis 8, wobei das mindestens eine Pigment (d) in der Form einer Pigmentdispersion vorliegt, die vorteilhafterweise in der Gruppe ausgewählt ist, bestehend aus Pigment Black 7, Pigment Blue 15 : 3, Pigment Red 210, Pigment Green 7 und Mischungen davon, und noch vorteilhafter in der Gruppe ausgewählt ist, bestehend aus Pigment Black 7, Pigment Blue 15 : 3 und Mischungen davon.

10. Schreibtintenzusammensetzung nach Anspruch 1 bis 9, wobei die Gesamtmenge des Pigments (d) von 0,5 bis 7 Gew.-%, relativ zu dem Gesamtgewicht der Schreibtintenzusammensetzung reicht und/oder wobei der Gesamtgehalt des mindestens einen Farbstoffs (c) von 0,2 bis 8 Gew.-%, und insbesondere von 0,3 bis 5 Gew.-%, relativ zu dem Gesamtgewicht der Schreibtintenzusammensetzung reicht.

11. Schreibtintenzusammensetzung nach einem der Ansprüche 1 bis 10, wobei die Gesamtmenge an Wasser (e) von 10 bis 80 Gew.-%, spezieller von 20 bis 80 Gew.-% und insbesondere von 40 bis 80 Gew.-%, relativ zu dem Gesamtgewicht der Schreibtintenzusammensetzung reicht.

12. Schreibtintenzusammensetzung nach einem der Ansprüche 1 bis 11, wobei die Zusammensetzung ferner mindestens ein Additiv umfasst, das vorteilhafterweise in der Gruppe ausgewählt ist, bestehend aus antimikrobiellen Mitteln, antifungalen Mitteln, Dispergiermitteln, Benetzungsmitteln, pH-Wert-Regulatoren und Mischungen davon.

13. Schreibtintenzusammensetzung nach einem der Ansprüche 1 bis 12, wobei es sich um eine abziehbare Schreibtinte, spezieller um eine abziehbare farbwechselnde Schreibtinte handelt, vorteilhafterweise wobei die Schreibtintenzusammensetzung durch Abziehen von einer ersten Ausgangsfarbe in eine zweite Farbe wechselt, noch vorteilhafter durch die Verwendung eines Fingers oder eines Reibkörpers, wobei der Reibkörper ein Radiergummi oder ein Tuch ist.

14. Schreibgerät, das eine Schreibtintenzusammensetzung nach einem der Ansprüche 1 bis 13 enthält, wobei das Schreibgerät ein Stift ist, das vorteilhafterweise in der Gruppe ausgewählt ist, bestehend aus einem Filzstift, einem Textmarker, einem Markierstift, und noch vorteilhafter einem Schreibfilzstift, einem Farbfilzstift, einem Textmarker, optional, wobei das Schreibgerät einen Radiergummi umfasst, der sich vorteilhafterweise an der Kappe oder an dem nicht schreibenden Ende des Schreibgeräts befindet.

15. Verfahren zum Schreiben auf einem porösen Schreibsubstrat, umfassend den Schritt des Aufbringens einer Schreibtintenzusammensetzung nach einem der Ansprüche 1 bis 13 auf ein poröses Schreibsubstrat, das vorteilhafterweise in der Gruppe ausgewählt ist, bestehend aus Papier, Druckerpapier oder Pappe, spezieller ferner umfassend den Schritt des Änderns der ursprünglichen Farbe (ersten Farbe) der Schreibmarkierung in eine andere Farbe (zweite Farbe) durch Abziehen, noch vorteilhafter durch Abziehen der Schreibmarkierung mit einem Finger oder mit einem Reibungskörper, wobei der Reibungskörper ein Radiergummi oder ein Tuch ist.

## Revendications

1. Composition d'encre d'écriture comprenant :
(a) au moins un polymère élastomère filmogène dans laquelle le polymère élastomère filmogène (a) est un homopolymère ou copolymère de polyuréthane,
(b) au moins un polysiloxane à modification polyéther,
(c) au moins un colorant,
(d) au moins un pigment, et
(e) de l'eau
dans laquelle la teneur totale de l'au moins un colorant (c) va de 0,1 à 10 % en poids, par rapport au poids total de la composition d'encre d'écriture et la quantité totale du pigment (d) va de 0,1 à 10 % en poids, par rapport au poids total de la composition d'encre d'écriture.

2. Composition d'encre d'écriture selon la revendication 1, dans laquelle l'homopolymère ou copolymère de polyuréthane (a) est choisi dans le groupe constitué par polyuréthanes amphotères, polyuréthanes anioniques, polyuréthanes cationiques, polyuréthanes non ioniques, polyester-polyuréthanes, polyéther-polyuréthanes et mélanges de ceux-ci, plus spécifiquement le polyuréthane (a) est un homopolymère de polyuréthane anionique.

3. Composition d'encre d'écriture selon l'une quelconque des revendications 1 ou 2, dans laquelle l'homopolymère ou copolymère de polyuréthane (a) est sous la forme d'une dispersion aqueuse.

4. Composition d'encre d'écriture selon l'une quelconque des revendications 1 à 3, dans laquelle la teneur totale en solides du polyuréthane (a) va de 8 à 25 %, plus spécifiquement de 10 à 20 %, en poids par rapport au poids total de la composition d'encre d'écriture.

5. Composition d'encre d'écriture selon l'une quelconque des revendications 1 à 4, dans laquelle l'au moins un polysiloxane à modification polyéther (b) est non ionique.

6. Composition d'encre d'écriture selon l'une quelconque des revendications 1 à 5, dans laquelle l'au moins un polysiloxane à modification polyéther (b) est un polydiméthylsiloxane à modification polyéther, avantageusement un polydiméthylsiloxane polyoxyéthyléné, et en particulier il s'agit d'une Bis-PEG 15-méthyl éther diméthicone.

7. Composition d'encre d'écriture selon l'une quelconque des revendications 1 à 6, dans laquelle la quantité totale de l'au moins un polysiloxane à modification polyéther (b) va de 0,5 à 5 % en poids, plus spécifiquement de 1 à 4 % en poids, par rapport au poids total de la composition d'encre d'écriture.

8. Composition d'encre d'écriture selon l'une quelconque des revendications 1 à 7, dans laquelle l'au moins un colorant (c) est choisi dans le groupe constitué par colorants directs, par exemple C.I direct black 17, 19, 22, 32, 38, 51, 71 ; C.I direct yellow 4, 26, 44, 50 ; C.I direct red 1, 4, 23, 31, 37, 39, 75, 80, 81, 83, 225, 226, 227 ; C.I direct blue 1, 15, 41, 71, 86, 87, 106, 108, 199, colorants acides, par exemple C.I acid black 1, 2, 24, 26, 31, 52, 107, 109, 110, 119, 154 ; C.I acid yellow 1, 7, 17, 19, 23, 25, 29, 38, 42, 49, 61, 72, 78, 110, 127, 135, 141, 142 ; C.I acid red 8, 9, 14, 18, 26, 27, 33, 35, 37, 51, 52, 57, 82, 83, 87, 92, 94, 111, 129, 131, 138, 186, 249, 254, 265, 276 ; C.I acid violet 15, 17, 49 ; C.I acid blue 1, 3, 7, 9, 15, 22, 23, 25, 40, 41, 43, 62, 78, 83, 90, 93, 100, 103, 104, 112, 113, 158 ; C.I acid green 3, 9, 16, 25, 27 ; C.I acid orange 56, colorants alimentaires, tels que C.I. food yellow 3, Malachite green (C.I 4200) Victoria blue FB (C.I. 44045) methyl violet FN (C.I. 42535), rhodamine F4G (C.I. 45160), et rhodamine 6GCP (C.I 45160), et mélanges de ceux-ci.

9. Composition d'encre d'écriture selon l'une quelconque des revendications 1 à 8, dans laquelle l'au moins un pigment (d) est sous la forme d'une dispersion de pigment, avantageusement choisi dans le groupe constitué par pigment black 7, pigment blue 15:3, pigment red 210, pigment green 7 et mélanges de ceux-ci, et plus avantageusement choisi dans le groupe constitué par pigment black 7, pigment blue 15:3 et mélanges de ceux-ci.

10. Composition d'encre d'écriture selon la revendication 1 à 9, dans laquelle la quantité totale du pigment (d) va de 0,5 à 7 % en poids, par rapport au poids total de la composition d'encre d'écriture et/ou dans laquelle la teneur totale de l'au moins un colorant (c) va de 0,2 à 8 %, et en particulier de 0,3 à 5 % en poids, par rapport au poids total de la composition d'encre d'écriture.

11. Composition d'encre d'écriture selon l'une quelconque des revendications 1 à 10, dans laquelle la quantité totale d'eau (e) va de 10 à 80 % en poids, plus spécifiquement de 20 à 80 % en poids, et en particulier de 40 à 80 % en poids, par rapport au poids total de la composition d'encre d'écriture.

12. Composition d'encre d'écriture selon l'une quelconque des revendications 1 à 11, dans laquelle la composition comprend en outre au moins un additif, avantageusement choisi dans le groupe constitué par agents antimicrobiens, agents antifongiques, agents de dispersion, agents mouillants, régulateurs de pH, et mélanges de ceux-ci.

13. Composition d'encre d'écriture selon l'une quelconque des revendications 1 à 12, dans laquelle il s'agit d'une encre d'écriture pelable, plus spécifiquement une encre d'écriture pelable à changement de couleur, avantageusement dans laquelle la composition d'encre d'écriture change d'une première couleur initiale à une seconde couleur par pelage, plus avantageusement par l'utilisation d'un doigt ou d'un corps de frottement dans laquelle le corps de frottement est une gomme ou un papier-mouchoir.

14. Instrument d'écriture contenant une composition d'encre d'écriture selon l'une quelconque des revendications 1 à 13, dans lequel l'instrument d'écriture est un stylo avantageusement choisi dans le groupe constitué par un feutre, un surligneur, un marqueur, et plus avantageusement un feutre d'écriture, un feutre de coloriage, un surligneur, facultativement dans lequel l'instrument d'écriture comprend une gomme, avantageusement localisée sur le capuchon ou sur l'extrémité de non-écriture de l'instrument d'écriture.

15. Procédé permettant d'écrire sur un substrat poreux d'écriture, comprenant l'étape d'application d'une composition d'encre d'écriture selon l'une quelconque des revendications 1 à 13 sur un substrat poreux d'écriture, avantageusement choisi dans le groupe constitué par papier, papier d'imprimante et carton, plus spécifiquement comprenant en outre l'étape consistant à changer la couleur initiale (première couleur) de la marque d'écriture en une autre couleur (seconde couleur) par pelage, avantageusement par pelage de la marque d'écriture avec un doigt ou avec un corps de frottement dans lequel le corps de frottement est une gomme ou un papier-mouchoir.
